# EUROPEAN PATENT SPECIFICATION

(11) **EP 3 524 483 B1**
(45) Date of publication and mention of the grant of the patent: **02.06.2021**
(21) Application number: 19275009.9
(22) Date of filing: 25.01.2019
(51) Int. Cl.: B60W 10/30, B60W 30/19, F16H 61/04, F16H 63/40

(54) **A MOTOR VEHICLE HAVING IMPROVED GEAR CHANGE QUALITY**
KRAFTFAHRZEUG MIT VERBESSERTER GANGWECHSELQUALITÄT
VÉHICULE À MOTEUR PRÉSENTANT UNE MEILLEURE QUALITÉ DE CHANGEMENT DE VITESSES

(30) Priority: 13.02.2018 GB 201802296
(43) Date of publication of application: 14.08.2019
(73) Proprietor: Ford Global Technologies, LLC, Dearborn, MI 48126 (US)
(72) Inventor: Witt, Dennis, Chelmsford, Essex CM2 6HT (GB)
(74) Representative: Haseltine Lake Kempner LLP

(56) References cited:
- EP-A1- 0 686 789
- DE-A1- 10 303 048
- DE-A1- 10 335 775
- US-A- 5 569 115
- US-A1- 2017 088 139

## Description

This invention relates to motor vehicles and, in particular, to a motor vehicle having a combustion engine driving a multi-speed manual gearbox via a manually controlled friction clutch, as known from DE 103 03 048 A1.

There is an ongoing need to improve the refinement of motor vehicles having internal combustion engines and one way of improving refinement is to reduce vibrations generated by fluctuations in engine rotational speed by increasing the inertia of the flywheel of such an engine.

However, the use of a flywheel of high inertia is disadvantageous during a change in ratio of an associated gearbox "a gear change" as the high inertia reduces the rate at which the engine can slow down or speed up. This slower response can result in a slower gear change or a large speed mismatch between the engine and an input shaft of the gearbox when the clutch is re-engaged at the end of the gear change which can result in unacceptable transmission jerk.

It is an object of this invention to provide a motor vehicle in which one or more external loads applied to the engine are adjusted during a gear change to improve the quality of the gear change.

According to a first aspect of the invention there is provided a motor vehicle having a combustion engine including a flywheel, a multi-speed gearbox driveably connectable to the combustion engine by a friction clutch, at least one electrically controllable load directly driven by the combustion engine, an electronic controller operatively connected to the at least one electrically controllable load, a number of inputs to the electronic controller including a first input to the electronic controller indicative of when a gear change event is predicted to occur and a second input to the electronic controller indicative of the type of gear change event predicted to occur wherein the electronic controller is arranged to increase the load applied by the at least one electrically controllable load during a gear change in which the friction clutch is disengaged from a normal load level required to meet a current need if the type of gear change predicted is an upshift and is further arranged to decrease the load applied by the at least one electrically controllable load during a gear change in which the friction clutch is disengaged from the normal load level if the type of gear change predicted is a downshift and is further arranged when the friction clutch is re-engaged and the gear change event ends to restore the at least one electrically controllable load to the normal load level.

Increasing the load during a gear change may comprise increasing the load applied to the combustion engine by the at least one electrically controllable load from the normal level to the maximum load that can be applied by the at least one electrically controllable load to the combustion engine.

Decreasing the load during a gear change may comprise decreasing the load applied to the combustion engine by the at least one electrically controllable load from the normal level to the minimum load that can be applied by the at least one electrically controllable load to the combustion engine.

The at least one electrically controllable load according to the invention is a variable displacement oil pump, increasing the load applied to the combustion engine may comprises increasing the displacement of the oil pump and decreasing the load applied to the combustion engine may comprise reducing the displacement of the oil pump.

In which case, the displacement of the variable displacement oil pump may be increased to a maximum flow state to increase the load and the displacement of the variable displacement oil pump may be reduced to a minimum flow state to decrease the load.

They may be at least a second electrically controllable loads chosen from a variable output engine coolant pump, an air conditioner pump, a fuel pump and an electrical generator.

The second electrically controllable load may be a variable output engine coolant pump, increasing the load applied to the combustion engine may comprises increasing the output from the coolant pump and decreasing the load applied to the combustion engine may comprise decreasing the output from the engine coolant pump.

In which case, the output from the variable output coolant pump may be increased to a maximum flow state to increase the load and the output from the variable output coolant pump may be reduced to a minimum flow state to decrease the load.

The second electrically controllable load may be an air conditioner pump, increasing the load applied to the combustion engine may comprise engaging the air conditioner compressor and decreasing the load applied to the combustion engine may comprise dis-engaging the air conditioner compressor.

The second electrically controllable load may be a fuel pump, increasing the load applied to the combustion engine comprises adjusting the fuel pump to increase fuel rail pressure and decreasing the load applied to the combustion engine comprises adjusting the fuel pump to reduce fuel rail pressure.

In which case, the fuel pump may be adjusted to increase fuel rail pressure to a maximum operating pressure to increase the load and the fuel pump may be adjusted to reduce fuel rail pressure to a minimum operating pressure to reduce the load.

The second electrically controllable load may be an electrical generator, increasing the load applied to the combustion engine may comprise increasing an electrical load applied to the electrical generator so as to increase the load applied by the electrical generator to the combustion engine and decreasing the load applied to the combustion engine may comprise disconnecting any electrical loads connected to the electrical generator so as to decrease to a minimum the load applied by the electrical generator to the combustion engine.

The first input to the electronic controller may be an output from a sensor used to indicate the engagement state of the clutch. The second input to the electronic controller may be an input indicative of engine speed.

If engine speed is indicated as increasing then this may be used as a prediction that the gear change will be an upshift and if engine speed is indicated as decreasing then this may be used as a prediction that the gear change will be a downshift.

According to a second aspect of the invention there is provided a method of controlling the operation of a motor vehicle during a gear change of a multi-speed gearbox driven via a friction clutch by an engine forming part of the motor vehicle wherein the method comprises checking whether a gear change event during which the friction clutch is disengaged is predicted to occur and, if a gear change event is predicted to occur, establishing the type of gear change event predicted to occur and, if the type of gear change predicted to occur is an upshift, increasing the load applied by at least one electrically controllable load directly driven by the engine during the gear change from a normal load level required to meet a current need and, if the type of gear change expected to occur is a downshift, decreasing the load applied by the at least one electrically controllable load directly driven by the engine during the gear change from the normal load level and, when friction clutch is engaged and the gear change event ends, restoring the at least one electrically controllable load to a normal load level.

Increasing the load applied to the engine by the at least one electrically controllable load may comprise increasing the load from the normal load level to a maximum load level for the duration of the gear change event and decreasing the load during the gear change may comprise decreasing the load applied to the engine by the at least one electrically controllable load from the normal load level to a minimum load level for the duration of the gear change event.

The invention will now be described by way of example with reference to the accompanying drawing of which:-
Fig.1 is a schematic diagram of a motor vehicle in accordance with a first aspect of the invention; and
Fig.2 is a high level flow chart showing a method of controlling a motor vehicle during a gear change event in accordance with a second aspect of the invention.

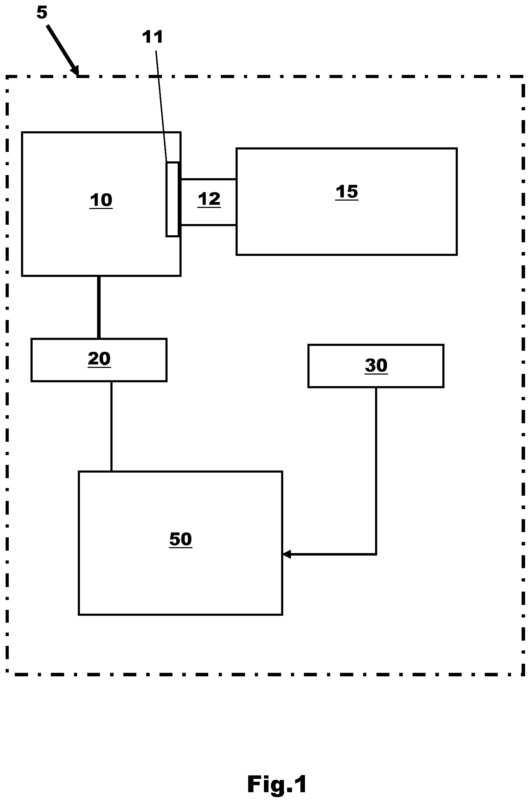

With particular reference to Fig.1 there is shown a motor vehicle 5 having a combustion engine 10 including a flywheel 11, a multi-speed gearbox 15 driveably connectable to the combustion engine 10 by a manually controlled friction clutch 12, one or more electrically controllable loads 20 directly driven by the combustion engine 10 via a shaft drive, a belt drive or a chain drive and an electronic controller 50 operatively connected to each electrically controllable load 20 to vary the load applied by each of the electrically controllable loads 20 directly to the engine 10 and preferably to a crankshaft of the engine 10.

It will be appreciated that to effect a gear change an operator of the motor vehicle 5 will depress a clutch pedal to cause the friction clutch 12 to be disengaged and will maintain the friction clutch 12 disengaged while moving a gear lever to transition the multi-speed gearbox from the currently selected gear to a desired gear preferably in a single movement without any significant delay. At the end of the gear change the operator will re-engage the friction clutch 12 with the new gear selected.

It will be appreciated that, although the electronic controller 50 is shown in Fig.1 as a single unit, the electrical controller 50 could alternatively comprise of a number of separate controllers that are arranged to cooperate in order to produce the desired effect.

The electronic controller 50 is arranged to receive a number of inputs 30 which are used to control the level of the load applied to the combustion engine 10 by each of the electrically controllable loads 20 at least during a gear change event. The inputs 30 include a first input indicative of when a gear change event is predicted to occur and a second input indicative of the type of gear change event predicted to occur.

The first input to the electronic controller 50 is any suitable input from which it can be deduced that a gear change is about to occur.

For example, the first input can be an output from a sensor used to indicate the engagement state of the clutch 12 in combination with an indication that the motor vehicle 5 is moving. It will be appreciated that if the clutch 12 is placed in a disengaged state while the motor vehicle 5 is moving this can be used to predict that a gear change is about to occur.

It will be appreciated that other means could be used to provide the first input such as, for example and without limitation, a sensor associated with a knob on a gear lever used to change gear. When pressure is applied to the gear knob, the gear knob sensor is operable to provide an output to the electronic controller 50 indicative that a gear change is predicted to occur.

The second input to the electronic controller 50 can be any suitable input from which the type of gear change can be deduced.

For example, the second input can be an input indicative of engine speed. It will be appreciated that if the rotational speed of the combustion engine 10 is increasing immediately prior to the start of a gear change event then the probability is that the gear change event will be an upshift into a higher gear.

Similarly, if the rotational speed of the combustion engine 10 is decreasing immediately prior to the start of a gear change event then the probability is that the gear change event will be a downshift into a lower gear.

It will be appreciated that other techniques can be used to predict the type of gear change and that the invention is not limited to the use of engine speed. For example, in UK patent GB-2,991,940 a system and method for predicting next to be engaged gear is disclosed which could be used to provide the second input.

Based upon the first and second inputs received by the electronic controller 50, the electronic controller 50 is arranged to increase the load applied by one or more of the electrically controllable loads 20 during a gear change if the type of gear change predicted based upon the second input is an upshift and is further arranged to decrease the load applied by one or more of the electrically controllable loads 20 during a gear change if the type of gear change predicted based upon the second input is a downshift.

When the first input indicates that the gear change event has ended the electronic controller 50 is arranged to restore any electrically controllable load 20 adjusted during the gear change event back to a normal load level required to meet a current need for that electrically controllable load.

The amount a load is increased is preferably the maximum that it can be increased even if that would temporarily affect the function that it is designed to perform. Therefore during a gear change event the respective electrically controllable load 20 will be controlled by the electronic controller 50 to increase the load directly applied to the combustion engine 10 by that electrically controllable load 20 from its normal level to the maximum load that can be directly applied by that electrically controllable load 20 to the combustion engine 10.

The amount a load is reduced is preferably the maximum that it can be reduced even if that would temporarily affect the function that it is designed to perform. Therefore, during a gear change event, the respective electrically controllable load 20 will be controlled by the electronic controller 50 to reduce the load applied to the combustion engine 10 by that electrically controllable load 20 from its normal level to the minimum load that can be applied by that electrically controllable load 20 to the combustion engine 10.

It will be appreciated that in some embodiments only a single electrically controllable load is driven by the combustion engine 10 but in other embodiments several electrically controllable loads 20 will be directly driven by the engine 10

Non limiting examples of electrically controllable loads are a variable displacement oil pump, a variable output engine coolant pump, an air conditioner pump, a fuel pump and an electrical generator.

If the electrically controllable load is a variable displacement oil pump, then increasing the load applied to the combustion engine 10 will comprise adjusting the displacement of the oil pump to a maximum flow state and decreasing the load applied to the combustion engine 10 will comprise adjusting the displacement of the oil pump to a minimum flow state.

If the electrically controllable load is a variable output engine coolant pump, then increasing the load applied to the combustion engine 10 will comprise adjusting the output from the coolant pump to a maximum flow state and decreasing the load applied to the combustion engine will comprise adjusting the output from the engine coolant pump to a minimum flow state.

If the electrically controllable load is an air conditioner pump, then increasing the load applied to the combustion engine 10 will comprise engaging the air conditioner compressor and decreasing the load applied to the combustion engine 10 will comprise dis-engaging the air conditioner compressor.

It will be appreciated that typically air conditioner compressors are driven by an engine via a clutch and so engaging the air conditioning compressor will comprise engaging the clutch used to drive the air conditioning compressor and dis-engaging the air conditioning compressor will comprise dis-engaging the clutch used to drive the air conditioning compressor.

If the electrically controllable load is a fuel pump, then increasing the load applied to the combustion engine will comprise adjusting the fuel pump to increase fuel rail pressure to a maximum operating pressure and decreasing the load applied to the combustion engine 10 will comprise adjusting the fuel pump to reduce fuel rail pressure to a minimum operating pressure.

If the electrically controllable load is an electrical generator, then increasing the load applied to the combustion engine 10 will comprise increasing the electrical load applied to the electrical generator so as to increase the load it applies to the combustion engine and decreasing the load applied to the combustion engine 10 will comprise disconnecting any electrical loads connected to the electrical generator so as to reduce to a minimum the load applied by the electrical generator to the combustion engine 10.

The electrical load applied to the electrical generator could be any suitable load such as, for example, charging a battery, powering a rear screen heater, powering a seat heater or any other suitable device controllable by the electronic controller 50 requiring a source of electrical power.

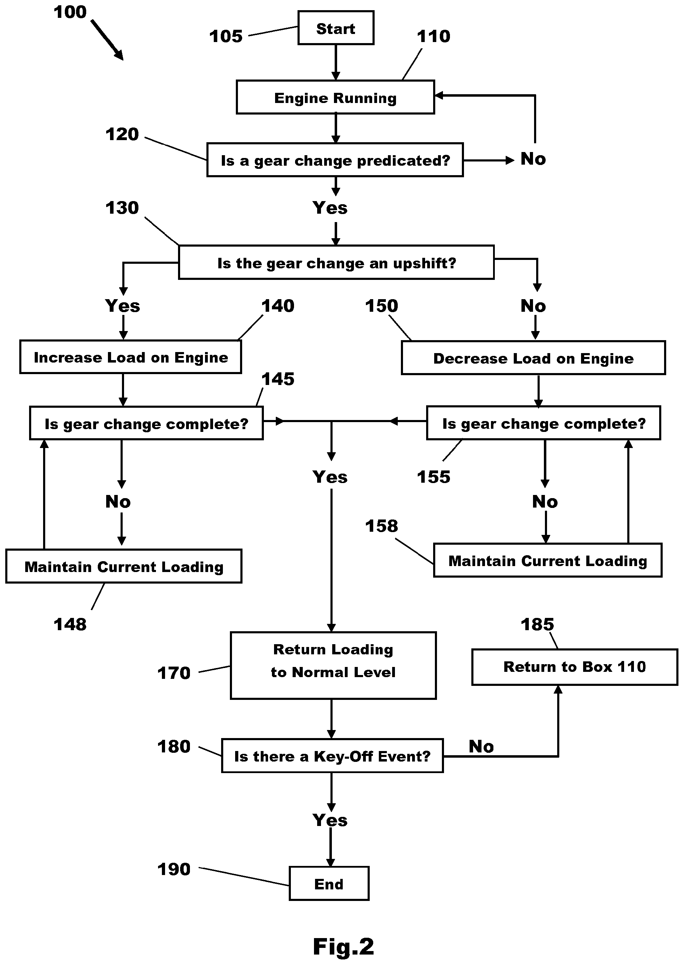

With reference to Fig.2 there is shown a method 100 of controlling the operation of a motor vehicle during a gear change of a multi-speed transmission driven by an engine forming part of the motor vehicle.

The method 100 starts in box 105 which could be a Key-on event and then advances to box 110 where the engine of the motor vehicle such as the motor vehicle 5 is running.

From box 110 the method 100 advances to box 120 to check whether a gear change is predicted to occur. If a gear change is not predicted to occur, the method 100 returns to box 110 and will cycle around boxes 110 and 120 until either a gear change is predicted to occur or there is a Key-off event. If there is a Key-off event then the method 100 will end and, although not shown in Fig.2, the method 100 will advance to box 190.

If when checked in box 120 a gear change is predicted to occur then the method 100 advances to box 130 to check or establish the type of gear change event predicted to occur. In the case of this example this is done by checking in box 130 to see whether the predicted gear change is an upshift but it will be appreciated that the check in box 130 could alternatively be a check to see whether the predicted gear change is a downshift. In either case a determination is made as to whether the predicted gear change is an upshift or a downshift.

If the type of gear change predicted to occur is an upshift, the method 100 advances from box 130 to box 140 where one or more electrically controllable loads driven by the engine are controlled to increase the load they apply to the engine. Preferably, the or each load is increased to provide the maximum load possible.

The method 100 then advances from box 140 to box 145 where it is checked whether the gear change is complete. This can be done in any suitable manner such as checking whether the clutch connecting the engine to the multi-speed gearbox is engaged.

If the gear change is not complete the method 100 advances to box 148 where the additional loading from the electrically controllable loads is maintained at the current high level and then returns to box 145 to check again whether the gear change is complete.

If when checked in box 145 the gear change is determined to be complete, then the method 100 advances from box 145 to box 170 where any of loads that have had their loading increased are returned to a normal level required to meet the current need for that load.

From box 170 the method 100 advances to box 180 to check whether there has been a Key-off event and if there has not the method 100 returns via box 185 to box 110. However, if there has been a Key-off event then the method 100 advances from box 180 to box 190 where it ends. It will be appreciated that at any time if there is a Key-off event then the method 100 will end.

Returning to box 130, if it is determined that the gear change is predicted to be a downshift, then the method 100 advances from box 130 to box 150.

In box 150 one or more electrically controllable loads driven by the engine are controlled so as to decrease the load applied by the respective electrically controllable load. Preferably, the or each load is decreased to provide the minimum load possible.

The method 100 then advances from box 150 to box 155 where it is checked whether the gear change is complete. As before, this can be done in any suitable manner such as checking whether the clutch connecting the engine to the multi-speed gearbox is engaged.

If the gear change is not complete, the method 100 advances to box 158 where the additional loading from the electrically controllable loads is maintained at the current level and then returns to box 155 to check again whether the gear change is complete.

If when checked in box 155 the gear change is determined to be complete, then the method 100 advances from box 155 to box 170 where any of loads that have had their loading increased are returned to a normal level required to meet the current need for that load.

From box 170 the method 100 advances to box 180 to check whether there has been a Key-off event and if there has not the method 100 returns via box 185 to box 110. However, if there has been a Key-off event then the method 100 advances from box 180 to box 190 where it ends.

Therefore, the method 100 is operable to increase the load applied to an engine by engine driven loads during an upshift in order to reduce the rotational speed of the engine more rapidly than would otherwise be the case thereby reducing the time taken to effect a gear change and reducing the energy that has to be dissipated by the clutch during synchronisation of engine speed with gearbox input speed.

In the case of a downshift the method 100 is operable to adjust the load applied to the engine by engine driven loads to reduce the level of these loads thereby enabling the rotational speed of the engine to be more easily increased to match the input speed of the gearbox.

The effect of these adjustment of load applied to the engine is to improve the quality of a gear change irrespective of whether it is an upshift or a downshift.

One of the non-obvious features of the invention is that loads applied to the engine by engine driven components such as a variable displacement oil pump, a variable output engine coolant pump, an air conditioner pump, a fuel pump and an electrical generator can be allowed to be operated outside a normal operational range because the length of time that they have to be so operated is very short namely only the length of time that it takes to change from one gear ratio to another gear ratio.

It will be appreciated that each electrically controllable load driven by the combustion engine is a load that acts directly upon the engine. That is to say, it is a load driven by the engine via one of a chain drive, a belt drive, a gear drive or a direct drive connection (with or without a clutch) to a rotating part of the engine.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A motor vehicle (5) having a combustion engine (10) including a flywheel (11), a multi-speed gearbox (15) driveably connectable to the combustion engine (10) by a friction clutch (12), at least one electrically controllable load (20) directly driven by the combustion engine (10), an electronic controller (50) operatively connected to the at least one electrically controllable load (20), a number of inputs (30) to the electronic controller (50) including a first input to the electronic controller (50) indicative of when a gear change event is predicted to occur and a second input to the electronic controller (50) indicative of the type of gear change event predicted to occur wherein the electronic controller (50) is arranged to increase the load applied by the at least one electrically controllable load (20) during a gear change in which the friction clutch (12) is disengaged from a normal load level required to meet a current need if the type of gear change predicted is an upshift and is further arranged to decrease the load applied by the at least one electrically controllable load (20) during a gear change in which the friction clutch (12) is disengaged from the normal load level if the type of gear change predicted is a downshift and is further arranged when the friction clutch (12) is re-engaged and the gear change event ends to restore the at least one electrically controllable load (20) to the normal load level, **characterised in that** the at least one electrically controllable load (20) comprises a variable displacement oil pump, increasing the load applied to the combustion engine (10) comprises increasing the displacement of the oil pump and decreasing the load applied to the combustion engine (10) comprises reducing the displacement of the oil pump.

2. A motor vehicle as claimed in claim 1 wherein increasing the load during a gear change comprises increasing the load applied to the combustion engine (10) by the at least one electrically controllable load (20) from the normal level to the maximum load that can be applied by the at least one electrically controllable load (20) to the combustion engine (10).

3. A motor vehicle as claimed in claim 1 or in claim 2 wherein decreasing the load during a gear change comprises decreasing the load applied to the combustion engine (10) by the at least one electrically controllable load (20) from the normal level to the minimum load that can be applied by the at least one electrically controllable load (20) to the combustion engine (10).

4. A motor vehicle as claimed in any of claims 1 to 3 wherein there are at least two electrically controllable loads (20), the second one chosen from a variable output engine coolant pump, an air conditioner pump, a fuel pump and an electrical generator.

5. A motor vehicle as claimed in claim 4 wherein the second electrically controllable load (20) is a variable output engine coolant pump, increasing the load applied to the combustion engine (10) comprises increasing the output from the coolant pump and decreasing the load applied to the combustion engine (10) comprises decreasing the output from the engine coolant pump.

6. A motor vehicle as claimed in claim 4 wherein the second electrically controllable load (20) is an air conditioner pump, increasing the load applied to the combustion engine (10) comprises engaging the air conditioner compressor and decreasing the load applied to the combustion engine (10) comprises dis-engaging the air conditioner compressor.

7. A motor vehicle as claimed in claim 4 wherein the second electrically controllable load (20) is a fuel pump, increasing the load applied to the combustion engine (10) comprises adjusting the fuel pump to increase fuel rail pressure and decreasing the load applied to the combustion engine (10) comprises adjusting the fuel pump to reduce fuel rail pressure.

8. A motor vehicle as claimed in claim 4 wherein the second electrically controllable load (20) is an electrical generator, increasing the load applied to the combustion engine (10) comprises increasing an electrical load applied to the electrical generator so as to increase the load applied by the electrical generator to the combustion engine (10) and decreasing the load applied to the combustion engine (10) comprises disconnecting any electrical loads connected to the electrical generator so as to decrease to a minimum the load applied by the electrical generator to the combustion engine (10).

9. A motor vehicle as claimed in any of claims 1 to 8 wherein the first input to the electronic controller (50) is an output from a sensor used to indicate the engagement state of the clutch (12) and the second input to the electronic controller (50) is an input indicative of engine speed.

10. A motor vehicle as claimed in claim 9 wherein if engine speed is indicated as increasing then this is used as a prediction that the gear change will be an upshift and if engine speed is indicated as decreasing then this is used as a prediction that the gear change will be a downshift.

11. A method of controlling the operation of a motor vehicle (5) during a gear change of a multi-speed gearbox (15) driven via a friction clutch (12) by an engine (10) forming part of the motor vehicle (5) wherein the method (100) comprises checking whether a gear change event during which the friction clutch (12) is disengaged is predicted to occur and, if a gear change event is predicted to occur, establishing the type of gear change event predicted to occur and, if the type of gear change predicted to occur is an upshift, increasing the load applied by at least one electrically controllable load (20) directly driven by the engine (10) during the gear change from a normal load level required to meet a current need and, if the type of gear change expected to occur is a downshift, decreasing the load applied by the at least one electrically controllable load (20) directly driven by the engine (10) during the gear change from the normal load level and, when the friction clutch (12) is re-engaged and the gear change event ends, restoring the at least one electrically controllable load (20) to a normal load level, the method being **characterised in that** the at least one electrically controllable load (20) comprises a variable displacement oil pump, increasing the load applied to the combustion engine (10) comprises increasing the displacement of the oil pump and decreasing the load applied to the combustion engine (10) comprises reducing the displacement of the oil pump.

12. A method as claimed in claim 11 wherein increasing the load applied to the engine by the at least one electrically controllable load (20) comprises increasing the load from the normal load level to a maximum load level for the duration of the gear change event and decreasing the load during the gear change comprises decreasing the load applied to the engine (10) by the at least one electrically controllable load (20) from the normal load level to a minimum load level for the duration of the gear change event.

## Patentansprüche

1. Kraftfahrzeug (5), das einen Verbrennungsmotor (10) aufweist, beinhaltend ein Schwungrad (11), ein Mehrganggetriebe (15), das durch eine Reibungskupplung (12) antreibbar mit dem Verbrennungsmotor (10) verbunden werden kann, mindestens eine elektrisch steuerbare Last (20), die direkt von dem Verbrennungsmotor (10) angetrieben wird, eine elektronische Steuerung (50), die funktionsfähig mit der mindestens einen elektrisch steuerbaren Last (20) verbunden ist, eine Anzahl von Eingängen (30) zu der elektronischen Steuerung (50), beinhaltend einen ersten Eingang zu der elektronischen Steuerung (50), der indikativ dafür ist, wann ein Eintreten eines Gangwechselereignisses vorhergesagt wird, und einen zweiten Eingang zu der elektronischen Steuerung (50), der indikativ für die Art von Gangwechselereignis ist, dessen Eintreten vorhergesagt wird, wobei die elektronische Steuerung (50) angeordnet ist, um die Last, die von der mindestens einen elektrisch steuerbaren Last (20) während eines Gangwechsels angelegt wird, bei dem die Reibungskupplung (12) ausgerückt wird, von einem normalen Lastniveau zu erhöhen, das erforderlich ist, um einen aktuellen Bedarf zu decken, wenn die Art des vorhergesagten Gangwechsels ein Hochschalten ist, und ferner angeordnet ist, um die Last, die von der mindestens einen elektrisch steuerbaren Last (20) während eines Gangwechsels angelegt wird, bei dem die Reibungskupplung (12) von dem normalen Lastniveau ausgerückt wird, zu verringern, wenn die Art des vorhergesagten Gangwechsels ein Herunterschalten ist, und ferner angeordnet ist, um, wenn die Reibungskupplung (12) wieder eingerückt ist und das Gangwechselereignis beendet ist, die mindestens eine elektrisch steuerbare Last (20) auf das normale Lastniveau zurückzusetzen, **dadurch gekennzeichnet, dass** die mindestens eine elektrisch steuerbare Last (20) eine Verstellölpumpe umfasst, ein Erhöhen der an dem Verbrennungsmotor (10) anliegenden Last ein Vergrößern der Verdrängung der Ölpumpe umfasst und ein Verringern der an dem Verbrennungsmotor (10) anliegenden Last ein Verringern der Verdrängung der Ölpumpe umfasst.

2. Kraftfahrzeug gemäß Anspruch 1, wobei ein Erhöhen der Last während eines Gangwechsels ein Erhöhen der Last, die durch die mindestens eine elektrisch steuerbare Last (20) auf den Verbrennungsmotor (10) angelegt wird, von dem normalen Niveau auf die maximale Last, die durch die mindestens eine elektrisch steuerbare Last (20) an den Verbrennungsmotor (10) angelegt werden kann, umfasst.

3. Kraftfahrzeug gemäß Anspruch 1 oder Anspruch 2, wobei ein Verringern der Last während eines Gangwechsels ein Verringern der Last, die durch die mindestens eine elektrisch steuerbare Last (20) an den Verbrennungsmotor (10) angelegt wird, von dem normalen Niveau auf die minimale Last, die durch die mindestens eine elektrisch steuerbare Last (20) an den Verbrennungsmotor (10) angelegt werden kann, umfasst.

4. Kraftfahrzeug gemäß einem der Ansprüche 1 bis 3, wobei es mindestens zwei elektrisch steuerbare Lasten (20) gibt, wobei die zweite ausgewählt ist aus einer Motorkühlmittelpumpe mit variablem Ausgang, einer Klimaanlagenpumpe, einer Kraftstoffpumpe und einem elektrischen Generator.

5. Kraftfahrzeug gemäß Anspruch 4, wobei die zweite elektrisch steuerbare Last (20) eine Motorkühlmittelpumpe mit variablem Ausgang ist, wobei ein Erhöhen der an dem Verbrennungsmotor (10) anliegenden Last ein Erhöhen des Ausgangs der Kühlmittelpumpe und ein Verringern der an dem Verbrennungsmotor (10) anliegenden Last ein Verringern des Ausgangs der Motorkühlmittelpumpe umfasst.

6. Kraftfahrzeug gemäß Anspruch 4, wobei die zweite elektrisch steuerbare Last (20) eine Klimaanlagenpumpe ist, wobei ein Erhöhen der an den Verbrennungsmotor (10) angelegten Last ein Einschalten des Klimaanlagenkompressors umfasst und ein Verringern der an den Verbrennungsmotor (10) angelegten Last ein Ausschalten des Klimaanlagenkompressors umfasst.

7. Kraftfahrzeug gemäß Anspruch 4, wobei die zweite elektrisch steuerbare Last (20) eine Kraftstoffpumpe ist, wobei ein Erhöhen der an den Verbrennungsmotor (10) angelegten Last ein Einstellen der Kraftstoffpumpe umfasst, um den Kraftstoffschienendruck zu erhöhen, und ein Verringern der an den Verbrennungsmotor (10) angelegten Last ein Einstellen der Kraftstoffpumpe umfasst, um den Kraftstoffschienendruck zu verringern.

8. Kraftfahrzeug gemäß Anspruch 4, wobei die zweite elektrisch steuerbare Last (20) ein elektrischer Generator ist, ein Erhöhen der an den Verbrennungsmotor (10) angelegten Last ein Erhöhen einer an den elektrischen Generator angelegten elektrischen Last umfasst, um die von dem elektrischen Generator an den Verbrennungsmotor (10) angelegte Last zu erhöhen, und ein Verringern der an den Verbrennungsmotor (10) angelegten Last ein Ausschalten aller an den elektrischen Generator angelegten elektrischen Lasten umfasst, um die von dem elektrischen Generator an den Verbrennungsmotor (10) angelegte Last auf ein Minimum zu verringern.

9. Kraftfahrzeug gemäß einem der Ansprüche 1 bis 8, wobei der erste Eingang zu der elektronischen Steuerung (50) einen Ausgang von einem Sensor ist, der verwendet wird, um den Einrückzustand der Kupplung (12) anzugeben, und der zweite Eingang zu der elektronischen Steuerung (50) eine Eingang ist, der indikativ für die Motordrehzahl ist.

10. Kraftfahrzeug gemäß Anspruch 9, wobei, wenn die Motordrehzahl als zunehmend angegeben wird, dies als Vorhersage verwendet wird, dass der Gangwechsel ein Hochschalten sein wird, und wenn die Motordrehzahl als fallend angegeben wird, dies als Vorhersage verwendet wird, dass der Gangwechsel ein Herunterschalten sein wird.

11. Verfahren zum Steuern des Betriebs eines Kraftfahrzeugs (5) während eines Gangwechsels eines Mehrganggetriebes (15), das über eine Reibungskupplung (12) von einem Motor (10) angetrieben wird, der Teil des Kraftfahrzeugs (5) ist, das Verfahren (100) umfassend ein Prüfen, ob ein Eintreten eines Gangwechselereignisses, bei dem die Reibungskupplung (12) ausgerückt ist, vorhergesagt wird, und, wenn ein Eintreten eines Gangwechselereignisses vorhergesagt wird, Festlegen der Art des Gangwechselereignisses, dessen Eintreten vorhergesagt wird, und, wenn die Art des Gangwechselereignisses, das vorhergesagt wird, ein Hochschalten ist, Erhöhen der Last, die von mindestens einer elektrisch steuerbaren Last (20) angelegt wird, die während des Gangwechsels direkt von dem Motor (10) angetrieben wird, von einem normalen Lastniveau, das erforderlich ist, um einen aktuellen Bedarf zu erfüllen, und, wenn die Art des Gangwechselereignisses, dessen Eintreten vorhergesagt wird, ein Herunterschalten ist, Verringern der Last, die von der mindestens einen elektrisch steuerbaren Last (20) angelegt wird, die während des Gangwechsels direkt von dem Motor (10) angetrieben wird, von dem normalen Lastniveau, und, wenn die Reibungskupplung (12) wieder eingerückt ist und das Gangwechselereignis beendet, Wiederherstellen der mindestens einen elektrisch steuerbaren Last (20) auf ein normales Lastniveau, wobei das Verfahren **dadurch gekennzeichnet ist, dass** die mindestens eine elektrisch steuerbare Last (20) eine Verstellölpumpe umfasst, ein Erhöhen der an dem Verbrennungsmotor (10) anliegenden Last ein Vergrößern der Verdrängung der Ölpumpe umfasst und ein Verringern der an dem Verbrennungsmotor (10) anliegenden Last ein Verringern der Verdrängung der Ölpumpe umfasst.

12. Verfahren gemäß Anspruch 11, wobei ein Erhöhen der Last, die durch die mindestens eine elektrisch steuerbare Last (20) an den Motor angelegt ist, ein Erhöhen der Last von dem normalen Lastniveau auf ein maximales Lastpegel über die Dauer des Gangwechselereignisses umfasst, und ein Verringern der Last während des Gangwechsels ein Verringern der Last, die durch die mindestens eine elektrisch steuerbare Last (20) an den Motor (10) angelegt ist, von dem normalen Lastniveau auf ein minimales Lastniveau über die Dauer des Gangwechselereignisses umfasst.

## Revendications

1. Un véhicule à moteur (5) ayant un moteur à combustion (10) comprenant un volant d'inertie (11), une boîte de vitesses à plusieurs vitesses (15) pouvant être connectée par entraînement au moteur à combustion (10) par un embrayage à friction (12), au moins une charge électriquement contrôlable (20) entraînée directement par le moteur à combustion (10), un contrôleur électronique (50) connecté fonctionnellement à l'au moins une charge électriquement contrôlable (20), un certain nombre d'entrées (30) vers le contrôleur électronique (50) comprenant une première entrée vers le contrôleur électronique (50) indiquant le moment où un événement de changement de vitesse est prévu de se produire et une deuxième entrée vers le contrôleur électronique (50) indiquant le type d'événement de changement de vitesse prévu pour se produire dans lequel le contrôleur électronique (50) est agencé pour augmenter la charge appliquée par l'au moins une charge électriquement contrôlable (20) pendant un changement de vitesse dans lequel l'embrayage à friction (12) est désengagé d'un niveau de charge normal requis pour répondre à un besoin actuel si le type de changement de vitesse prévu est une montée de vitesse et est en outre agencé pour diminuer la charge appliquée par l'au moins une charge électriquement contrôlable (20) pendant un changement de vitesse dans lequel l'embrayage à friction (12) est désengagé du niveau de charge normal si le type de changement de vitesse prévu est une rétrogradation et est en outre agencé lorsque l'embrayage à friction (12) est réengagé et que l'événement de changement de vitesse se termine pour ramener l'au moins une charge électriquement contrôlable (20) au niveau de charge normal, **caractérisé en ce que** l'au moins une charge électriquement contrôlable (20) comprend une pompe à huile à cylindrée variable, l'augmentation de la charge appliquée au moteur à combustion (10) comprend l'augmentation du déplacement de la pompe à huile et la diminution de la charge appliquée au moteur à combustion (10) comprend la réduction du déplacement de la pompe à huile.

2. Un véhicule à moteur selon la revendication 1 dans lequel l'augmentation de la charge pendant un changement de vitesse comprend l'augmentation de la charge appliquée au moteur à combustion (10) par l'au moins une charge électriquement contrôlable (20) à partir du niveau normal à la charge maximale qui peut être appliquée par l'au moins une charge électriquement contrôlable (20) au moteur à combustion (10).

3. Un véhicule à moteur selon la revendication 1 ou la revendication 2 dans lequel la diminution de la charge pendant un changement de vitesse comprend la diminution de la charge appliquée au moteur à combustion (10) par l'au moins une charge électriquement contrôlable (20) à partir du niveau normal à la charge minimale qui peut être appliquée par l'au moins une charge électriquement contrôlable (20) au moteur à combustion (10).

4. Un véhicule à moteur selon l'une quelconque des revendications 1 à 3 dans lequel il y a au moins deux charges électriquement contrôlables (20), la deuxième étant choisie parmi une pompe de refroidissement du moteur à débit variable, une pompe de climatiseur, une pompe à carburant et un générateur électrique.

5. Un véhicule à moteur selon la revendication 4 dans lequel la deuxième charge électriquement contrôlable (20) est une pompe de refroidissement du moteur à débit variable, l'augmentation de la charge appliquée au moteur à combustion (10) comprend l'augmentation du débit à partir de la pompe de refroidissement et la diminution de la charge appliquée au moteur à combustion (10) comprend la diminution du débit à partir de la pompe de refroidissement du moteur.

6. Un véhicule à moteur selon la revendication 4 dans lequel la deuxième charge électriquement contrôlable (20) est une pompe de climatiseur, l'augmentation de la charge appliquée au moteur à combustion (10) comprend l'engagement du compresseur de climatiseur et la diminution de la charge appliquée au moteur à combustion (10) comprend le désengagement du compresseur de climatiseur.

7. Un véhicule à moteur selon la revendication 4 dans lequel la deuxième charge électriquement contrôlable (20) est une pompe à carburant, l'augmentation de la charge appliquée au moteur à combustion (10) comprend le réglage de la pompe à carburant pour augmenter la pression de la rampe d'alimentation et la diminution de la charge appliquée au moteur à combustion (10) comprend le réglage de la pompe à carburant pour réduire la pression de la rampe d'alimentation.

8. Un véhicule à moteur selon la revendication 4 dans lequel la deuxième charge électriquement contrôlable (20) est un générateur électrique, l'augmentation de la charge appliquée au moteur à combustion (10) comprend l'augmentation d'une charge électrique appliquée au générateur électrique de manière à augmenter la charge appliquée par le générateur électrique au moteur à combustion (10) et la diminution de la charge appliquée au moteur à combustion (10) comprend la déconnexion de toute les charges électriques connectées au générateur électrique de manière à diminuer au minimum la charge appliquée par le générateur électrique au moteur à combustion (10).

9. Un véhicule à moteur selon l'une quelconque des revendications 1 à 8 dans lequel la première entrée du contrôleur électronique (50) est une sortie à partir d'un capteur utilisé pour indiquer l'état d'engagement de l'embrayage (12) et la deuxième entrée du contrôleur électronique (50) est une entrée indicative de la vitesse du moteur.

10. Un véhicule à moteur selon la revendication 9 dans lequel si la vitesse du moteur est indiquée comme augmentant, cela est utilisé comme prédiction que le changement de vitesse sera une montée de vitesse et si la vitesse du moteur est indiquée comme décroissante, cela est utilisé comme prédiction que le changement de vitesse sera une rétrogradation.

11. Un procédé de commande du fonctionnement d'un véhicule à moteur (5) pendant un changement de vitesse d'une boîte de vitesses à plusieurs vitesses (15) entraînée via un embrayage à friction (12) par un moteur (10) faisant partie du véhicule à moteur (5) dans lequel le procédé (100) comprend la vérification si un événement de changement de vitesse au cours duquel l'embrayage à friction (12) est désengagé est prévu de se produire et, si un événement de changement de vitesse est prévu de se produire, l'établissement du type d'événement de changement de vitesse prévu pour se produire et, si le type de changement de vitesse prévu pour se produire est une montée de vitesse, augmenter la charge appliquée par au moins une charge électriquement contrôlable (20) directement entraînée par le moteur (10) pendant le changement de vitesse à partir d'un niveau de charge normal requis pour répondre à un besoin actuel et, si le type de changement de vitesse qui devrait se produire est une rétrogradation, la diminution de la charge appliquée par l'au moins une charge électriquement contrôlable (20) directement entraînée par le moteur (10) pendant le changement de vitesse à partir du niveau de charge normal et, lorsque l'embrayage à friction (12) est réengagé et l'événement de changement de vitesse se termine, ramener l'au moins une charge électriquement contrôlable (20) à un niveau de charge normal, le procédé étant **caractérisé en ce que** l'au moins une charge électriquement contrôlable (20) comprend une pompe à huile à cylindrée variable, l'augmentation de la charge appliquée au moteur à combustion (10) comprend l'augmentation du déplacement de la pompe à huile et la diminution de la charge appliquée au moteur à combustion (10) comprend la réduction du déplacement de la pompe à huile.

12. Un procédé selon la revendication 11 dans lequel l'augmentation de la charge appliquée au moteur par l'au moins une charge électriquement contrôlable (20) comprend l'augmentation de la charge à partir du niveau de charge normal à un niveau de charge maximal pendant la durée de l'événement de changement de vitesse et la diminution de la charge pendant le changement de vitesse comprend la diminution de la charge appliquée au moteur (10) par l'au moins une charge électriquement contrôlable (20) à partir du niveau de charge normal à un niveau de charge minimal pendant la durée de l'événement de changement de vitesse.
